# EUROPÄISCHE PATENTANMELDUNG

(11) **EP 1 529 623 A2**
(43) Veröffentlichungstag der Anmeldung: **11.05.2005**
(21) Anmeldenummer: 04019353.4
(22) Anmeldetag: 14.08.2004
(51) Int. Cl.: B29C 65/02, B32B 31/00

(54) **Verfahren zur Herstellung von mehrschichtigen Materialbahnen**

(30) Priorität: 06.11.2003 DE 10351831
(71) Anmelder: RKW AG Rheinische Kunststoffwerke, 67547 Worms (DE)
(72) Erfinder: Epping, Reinhard, 48599 Gronau (DE)
(74) Vertreter: Zellentin, Wiger

(57) **Zusammenfassung**

Die Erfindung betrifft ein Verfahren zur Herstellung von mehrschichtigen Materialbahnen dadurch, dass man mit einer Trägerschicht aus einer Kunststofffolie sowie mindestens einer mit dieser verschweißten in Wellen angeordneten Vliesschicht (4), wobei man das Vlies (4) über fächerförmig angeordnete Fingerleisten einer Rillen aufweisenden Walze (1) zuführt, wobei die Verlängerung der Finger auf die Rillen oder deren Ränder ausgerichtet sind und dabei das Vlies (4) in die Rillenvertiefungen einführt. Dabei wird die Bahnbreite gerafft wird und über die so gewellte Vliesbahn (4) die Kunststofffolie kontinuierlich aufgetragen und mit Hilfe von den Rillenoberkanten zugeordneten Heizelementen miteinander verschweißt.

## Beschreibung

Die vorliegende Erfindung beschreibt eine neuartige querelastische, mehrschichtige Materialbahn sowie Verfahren zur ihrer Herstellung, welches vorzugsweise als elastische Abschlussmanschetten bei der Herstellung von Windelhöschen verwendet wird.

Elastische, mehrschichtige Materialbahnen, die als Laminate hergestellt werden sind bereits aus der EPA 2274754 und der DE 4238541 A1 bekannt. Gemäß dieser Literatur wird eine gummielastische Folie, beispielsweise aus PE-Copolymerisat oder Blockpolymerisat beidseitig mit einer Vliesbahn kaschiert, wodurch der Verbund ein textiles Aussehen und textile haptische Eigenschaften erhält. Die Verbindung wird durch gitterförmig angeordnete Schweißpunkte, welche den ganzen Verbund durchdringen hergestellt, wobei die Schweißpunkte vorzugsweise ringförmig ausgebildet sind, so dass die elastische Folie an diesen Stellen Löcher aufweist oder eine sehr dünne Restfolie übrig bleibt, durch die Gase aber keine Flüssigkeiten hindurchtreten. Beim Zusammenführen der Bahnen wird die elastische Folie in Längsrichtung vorgereckt und in diesem Zustand mit den Vliesbahnen verbunden, so dass nach dem Entlasten sich die Folie wieder zusammenzieht und die aufliegenden Vliesbahnen eine leichte Wellen- oder Kreppform bekommen, wodurch sich der textile Eindruck verstärkt. Entsprechende Laminate lassen sich wieder auseinanderziehen bis die Vliesbahnen eine glatte Lage erhalten und einem weiteren Strecken entgegenwirken.

Die DE 4238541 A1 sieht zusätzlich vor, dass auch die Vliesbahnen mechanisch gereckt sind und die Streckung von Folie zu Vliesbahn 1 zu Vliesbahn 2 abnimmt. Dadurch wird erreicht, dass beim anschließenden Zusammenziehen des Laminats Ober- und Unterseite unterschiedlich stark wellig wirken und beim Strecken Vliesbahn 1 leicht wellig ist, während Vliesbahn 2 schon gestreckt ist und ein weiteres Dehnen der Bahn verhindert.

Nachteilig an diesen bekannten Laminaten ist es, dass sie einerseits für ihre Herstellung durch das Verstrecken der Bahnen einen erhöhten apparativen Aufwand erfordern und andererseits dadurch, dass das Strecken nur in Längsrichtung möglich ist, die fertige Bahn auch nur in Längsrichtung eine gewisse Elastizität besitzt und für die übliche Anwendung als Abschlussbund in Streifen geschnitten, abgelängt und quer zur Maschinenrichtung eingebracht werden muss.

Die eigene unveröffentlichte Patentanmeldung DE 10304370 schlägt hierzu vor, Vliesbahnen gitterförmig mit einer thermoplastischen Elastomerfolie zu verschweißen und querelastisch dehnbare Vliesbahnen zu verwenden, die plan auf der Trägerfolie aufliegen.

Die vorliegende Erfindung hat sich die Aufgabe gestellt, eine andere Möglichkeit der Herstellung eines querelastischen Verbundaufbaus aus Folie und Vlies zu schaffen, die z. B. in der Richtung der Herstellung von Windeln zugeführt werden kann, so dass eine Querförderung wie herkömmlich entbehrlich ist, aber auch anderen Zwecken dienen kann, wie z. B. bei der Bekleidungsherstellung mit atmungsaktiven Membranen.

Die Lösung dieser Aufgabe gelingt mit einem Verfahren zur Herstellung von mehrschichtigen Materialbahnen dadurch, dass man mit einer Trägerschicht aus einer elastischen Kunststofffolie sowie mit ein oder zwei dieser in Wellen angeordneten Vliesschichten versieht, wobei man die Vliese über fächerförmig angeordneten Fingerleisten von Rillen aufweisenden Walzen zuführt. Die Verlängerung der Finger ist auf die Rillen oder deren Ränder ausgerichtet, wobei die Vliese in die Rillenvertiefungen eingeführt werden. Dabei werden die Bahnbreiten gerafft und die so gewellten Vliesbahnen einseitig oder beidseitig auf die Kunststofffolie kontinuierlich aufgetragen und durch Druck und Temperatur im Bereich der sich gegenüberliegenden Oberkanten miteinander verschweißt.

Dazu sind die Oberflächen der Stege der ersten Walze mit Gravurpunkten (Dorne) versehen, die die Materialbahnen derart durchgreifen, dass ein Kontaktdruck zu den glatten Oberflächen der Stege der zweiten Walze erreicht wird. Die elastische Folie wird an diesen punktförmigen Schweißstellen zerstört um das Material atmungsaktiv zu machen, und die beiden Vlieslagen werden miteinander verschweißt.

Durch die fächerförmige Anordnung der Fingerleisten wird ein gleichzeitiges Bewegen der Vliesbahn quer zur Förderrichtung erreicht, so dass sich durch ein Raffen zur Bahnmitte hin jeweils zwischen den Fingern ein durch ihren Abstand und den Winkel zwischen ihnen verursachter kleiner Durchhang bildet, der dem Querschnitt der Nuten angepasst ist und in diese einläuft.

Es entsteht damit ein Verbundmaterial aus einem oder bei Verwendung oberer und unterer Fingerleisten zwei zu Falten gerafften Vliesen auf einer elastischen Kunststofffolie. Durch die verwendete elastische Folie wird der Materialverbund bis zur Vliesstreckgrenze dehnbar und kann somit z. B. als elastischen Bündchen in Höschenwindel oder als Arm - Halsabschlussbündchen bei Einwegschutzanzügen verwendet werden.

Um ein Herabrutschen der Seitenkanten von den äußeren Fingerleisten zu verhindern, kann die Bahn einen beidseitigen Überhang aufweisen dessen Breite an die Zugkraft der benachbarten, durchhängenden Falten angepasst ist.

Die Kanten können auch in Mitnehmern gehalten sein oder Keder aufweisen, die in Schlitzen von eigenen Fingerleisten laufen. Der Überstand wird nach der Verschweißung abgetrennt.

Es entsteht eine Bahn mit längsverlaufender geraffter Wellung, die z. B. mit großem Vorteil in Produktionsrichtung einer Windelfertigung zugeführt werden kann, wo sie als Bündchen aufgeklebt oder aufgeschweißt und quergeschnitten wird.

Die Vertiefungen in der Walze, d. h. die umlaufenden Rillen können rechteckige, konische oder ausgerundete Querschnitte besitzen.

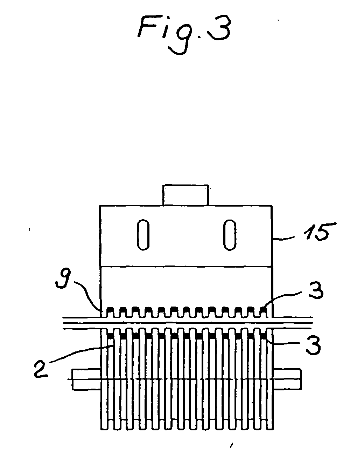

Die Verschweißung erfolgt mittels der beheizten "Rillenwalzen" (bekanntes thermobond Kalanderverfahren) oder über das Verschweißen mittels Ultraschalltechnologie. Beim Ultraschallschweißen entfällt die Walze mit den glatten Oberflächen und wird durch eine entsprechende Ultraschallsonotrode ersetzt (s. Fig. 3, 15). Die Unterkante der Sonotrode ist kammartig ausgeführt, deren Vertiefungen die Falten von den Fingern aufnehmen können.

Zusätzlich zu den beiden oben beschriebenen Schweißverfahren (Thermobond - und Ultraschallverfahren) können die Materialbahnen auch verklebt werden.

Beim Thermobondverfahren wird eine der Rillenwalzen gegen eine vollflächige Walze ersetzt und beim Ultraschallverfahren wird die Sonotrode nicht kammförmig sondern glatt ausgeführt.
Werden die Lagen miteinander verklebt, so wird ebenfalls eine Glattwalze als Gegenwalze eingesetzt.

Ein Materialverbund, bei dem ein gerafftes Vlies mit einem nicht gerafften Vlies verbunden wird, kann als Schlingenware (Landing Zone bei Höschenwindeln) für einen Klettverschluss eingesetzt werden. Durch eine Veränderung der Eintauchtiefe der Fingerleisten können die Wellen derart geformt werden, dass eine Schlingenware für alle gängigen Kletthaken gefertigt werden kann.

Anhand der beiliegenden Figuren wird die vorliegende Erfindung näher erläutert. Dabei zeigen:
- **Figur 1**: eine Draufsicht auf die Nutenwalze und einen Fingerfächer,
- **Figur 2**: die Zuführung von drei Lagen,
- **Figur 3**: die Verwendung einer Ultraschallsonotrode für die Verschweißung von drei Lagen und
- **Figur 4**: einen Windelzuschnitt sowie darauf angebrachte erfindungsgemäß hergestellte Bündchen.

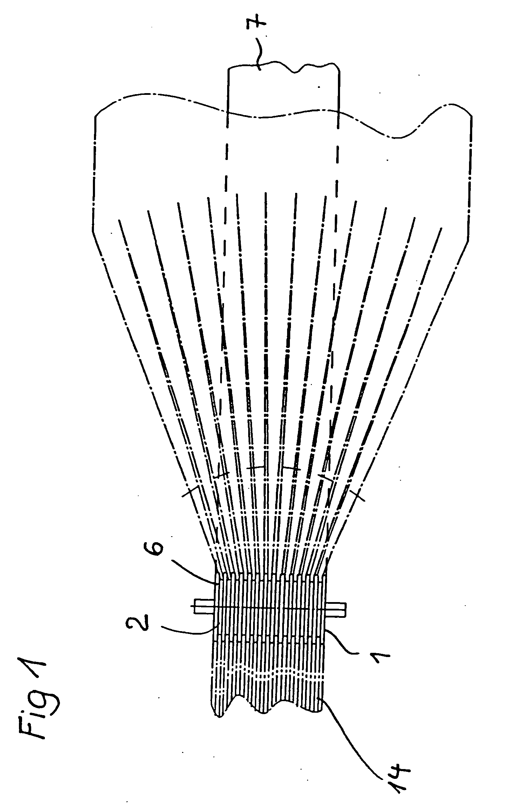

**Figur 1** zeigt in Draufsicht eine Walze 1 mit Nuten 2 sowie diesen zugekehrten fächerförmig zueinander angeordnete Fingerleisten 3, die unter einem spitzen Winkel auf die Nuten 2 zulaufen. Auf den Fingerleisten 3 liegt ein Vlies 4, das über die Nutenwalze 1 gefördert wird. Die Walze 1 ist über die Welle 5 angetrieben.

Die Raffung der Vliesbahnen 4 geschieht durch jeweils zwei Fingerleisten die derart angeordnet sind, dass eine Leiste in den Nutgrund einläuft, wodurch das Vlies niedergehalten wird und sich eine Schlaufe dadurch bildet, dass die zweite Leiste das Vlies auf die Stege der Walze übergibt, um es mit der/dem Folie/Vlies 7 zu verschweißen.

Um ein Herabfallen der Seitenbereiche neben den äußeren Fingerleisten 3 zu unterbinden, weist die Vliesbahn 4 z. B. eine Überbreite auf (Figur 3) über welche sie gesichert werden kann. Hinter der Nutenwalze 1 ist das Produkt 14 dargestellt.

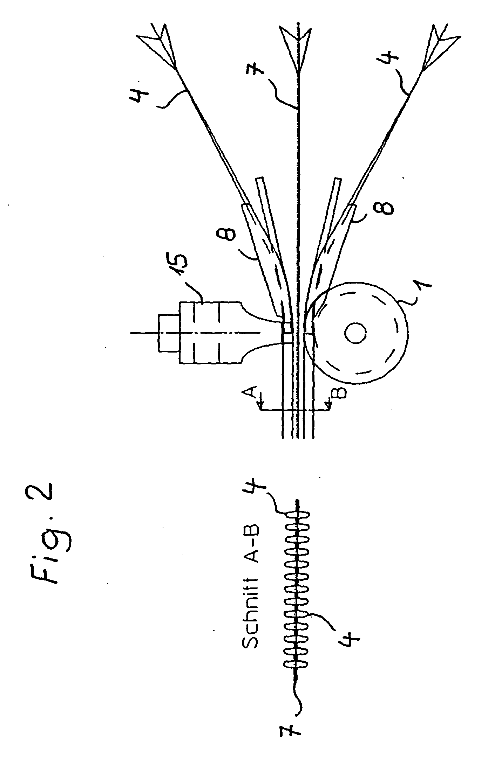

**Figur 2** zeigt die Vorrichtung in Seitenansicht, wobei hier ein dreilagiger Verbund hergestellt wird.

Dabei werden von oben und unten die gewellten Vliese 4 der Walze 1 und der Schweißvorrichtung 15 zugeführt, die dazu als kammartige Ultraschweißmaschine (Sonotrode) ausgebildet ist. In der Mitte wird die Folienbahn 7 aus elastischem Kunststoff zugestellt. Seitlich sind äußere Führungen 8 angedeutet. Der Schnitt AB zeigt den entstehenden Verbund aus oberem und unterem gewellten Vlies 4 sowie der dazwischen befindlichen Folie 7.

**Figur 3** zeigt in Stirnansicht die obere Schweißvorrichtung die als kammartige Ultraschallsonotrode ausgebildet ist. In vorliegendem Beispiel reichen die Fingerleisten 3 sowohl in den Grund des Kammes 9, als auch den Grund der Nuten 2 der Walze 1. Die Vlieslagen 4 sowie die Folie 7 stehen beidseitig über, die Überstände können abgeschnitten werden.

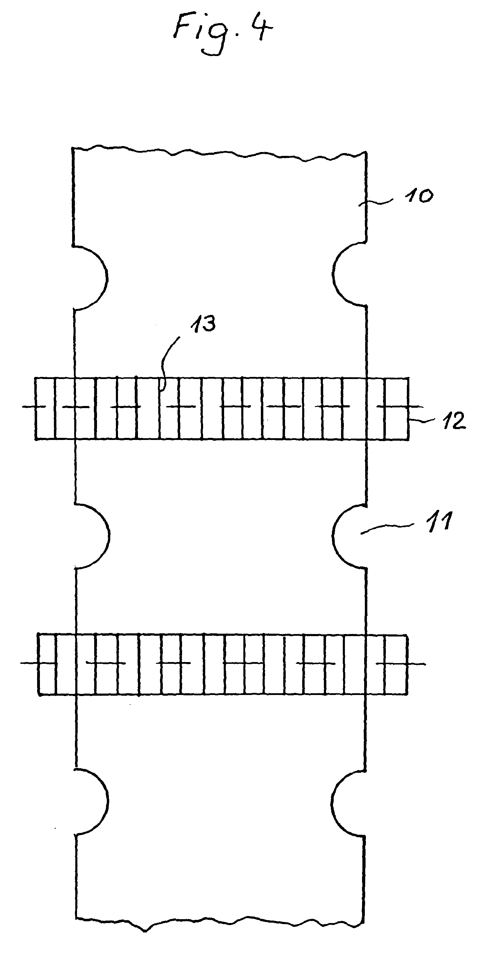

**Figur 4** zeigt einen von einer Maschine geförderten Windelausschnitt 10 mit Beinausnehmungen 11.

Auf diesen Zuschnitt 10 kann das erfindungsgemäße Verbundmaterial in längsrichtung, d. h. in Richtung der Zuschnittförderung zu Bündchen 12 zugeschnitten und aufgeschweißt werden, wobei die Schneidrichtung quer zur Materialbahn der Bündchen 12 erfolgt, da die Wellen 13 erfindungsgemäß ebenfalls längs zur Fördereinrichtung des Windelzuschnitts 10 liegen.

### Bezugszeichenliste

- 1: Walze
- 2: Nuten
- 3: Fingerleisten
- 4: Vlies
- 5: Welle
- 6: Stege
- 7: Folie
- 8: Führungen
- 9: Kamm
- 10: Windelzuschnitt
- 11: Beinausnehmungen
- 12: Bündchen
- 13: Wellen
- 14: Produkt

## Patentansprüche

1. Verfahren zur Herstellung von mehrschichtigen Materialbahnen mit einer Trägerschicht aus einer Kunststofffolie sowie mindestens einer mit dieser verschweißten in Wellen angeordneten Vliesschicht **dadurch gekennzeichnet, dass** man das Vlies über fächerförmig angeordnete Fingerleisten einer Rillen aufweisenden Walze zuführt, wobei die Verlängerung der Finger auf die Vertiefungen der Rillen ausgerichtet sind und dabei das Vlies in die Rillenvertiefungen durchhängend einführt, wobei die Bahnbreite gerafft wird und über die so gewellte Vliesbahn die Kunststofffolie kontinuierlich auflegt und mit Hilfe von den Rillenoberkanten zugeordneten Heizelementen die beiden Bahnen miteinander verschweißt.

2. Verfahren nach Anspruch 1 **dadurch gekennzeichnet, dass** man der Folie von oben und von unten Vliesbahnen unter Verwendung von zweiten fächerförmig angeordneten Fingerleisten zuführt und die obere Vliesbahn dabei in ein ebenfalls Nuten aufweisendes Heizgerät einführt, um beide gewellten Vliesbahnen mit der Folie zu verschweißen.

3. Verfahren nach Anspruch 1 oder 2 **dadurch gekennzeichnet, dass** die Folie eine dehnbare Folie ist.

4. Verfahren nach Anspruch 1 bis 3 **dadurch gekennzeichnet, dass** man die Verschweißung fortlaufend punktförmig durchführt.

5. Verfahren nach Anspruch 4 **dadurch gekennzeichnet, dass** man bei der Verschweißung die Folie locht.

6. Verfahren nach Anspruch 1 bis 5 **dadurch gekennzeichnet, dass** man die Verschweißung mit einer kammartig ausgebildeten Sonotrodenleiste durchführt.

7. Verfahren nach Anspruch 1 bis 6 **dadurch gekennzeichnet, dass** man die sich unter Schwerkraft zwischen dem Fingerleistenfächer ergebende Faltenbildung durch ein oder mehrere Gebläse unterstützt.

8. Vorrichtung zur Durchführung des Verfahrens nach Anspruch 1 bis 7 bestehend aus einer Walze (1) mit Nuten (2) sowie einer fächerförmigen Anordnung von Fingerleisten (3) die den Nuten (2) zugekehrt sind und eine Vliesbahn (4) wellenförmig über die Nutenoberkanten (5) und in den Nutengrund (6) im Bereich der Walzenoberkante zuführen und dabei die Bahnbreite entsprechend verjüngen, sowie einer mit den Oberkanten (5) der Nuten (2) zusammenwirkenden Heizvorrichtung (7) mit deren Hilfe die Vliesbahn wellenförmig zugeführten unter Bildung von längs in Produktionsrichtung laufenden Hohlfalten mit einer separat zugeführten Kunststofffolie verschweissbar ist.

9. Vorrichtung nach Anspruch 8 **dadurch gekennzeichnet, dass** auch die Heizeinrichtung Nuten aufweist und dieser zur Zuführung einer zweiten Vliesbahn ein zweiter Fächer von Fingerleisten zugeordnet ist.

10. Vorrichtung nach Anspruch 8 oder 9 **dadurch gekennzeichnet, dass** die Walze und oder die Heizeinrichtung mit Stacheln versehen ist.

11. Vorrichtung nach Anspruch 8 bis 10 **dadurch gekennzeichnet, dass** die Heizeinrichtung eine Sonotrode ist.

12. Vorrichtung nach Anspruch 8 bis 11 **dadurch gekennzeichnet, dass** den Fächern Gebläse zuschaltbar sind.
